# FASCICULE DE BREVET EUROPEEN

(11) **EP 2 794 083 B1**
(45) Date de publication et mention de la délivrance du brevet: **11.11.2020**
(21) Numéro de dépôt: 12816754.1
(22) Date de dépôt: 20.12.2012
(51) Int. Cl.: B01J 8/00, G01F 23/00

(54) **SUPPORT DE CAPTEUR POUR UN REACTEUR EN COURS DE CHARGEMENT**
SENSORTRÄGER FÜR EINEN REAKTOR WÄHREND DESSEN LADUNG
SENSOR SUPPORT FOR A REACTOR UNDERGOING CHARGING

(30) Priorité: 20.12.2011 FR 1162046
(43) Date de publication de la demande: 29.10.2014
(73) Titulaire: Total Raffinage France, 92400 Courbevoie (FR)
(72) Inventeur: MAIRESSE, Julien, F-33190 La Reole (FR); COTTARD, Bernard, F-76430 Saint Romain de Colbosc (FR)
(74) Mandataire: Fédit-Loriot
(86) Numéro de dépôt international: PCT/FR2012/053023
(87) Numéro de publication internationale: WO 2013/093357

(56) Documents cités:
- WO-A1-2004/027353
- WO-A1-2008/047050
- DE-A1- 10 106 176
- JP-A- 9 052 630
- US-A1- 2004 031 335

## Description

L'invention concerne un procédé de préparation d'un réacteur définissant une ouverture pour le passage d'un dispositif de distribution de particules solides apte à assurer un chargement de ce réacteur en particules solides, et un dispositif support de capteur pour un tel réacteur.

Il est connu de charger des réacteurs, notamment de type chimique, électrochimique, pétrolier ou pétrochimique, avec des particules solides à l'état divisé. Ces particules peuvent par exemple se présenter sous forme de billes, de grains, de cylindres, de pastilles, de bâtonnets ou de toute autre forme et ont en général des dimensions relativement faibles.

Les particules peuvent être en particulier des grains de catalyseurs solides, généralement extrudés réalisés soit sous forme régulière, soit sous forme de bâtonnets mono ou multilobes, dont les dimensions peuvent varier selon les cas de quelques dixièmes de millimètres à quelques centimètres.

C'est à cette application, dite de « chargement dense », de grains de catalyseurs dans un réacteur chimique que l'on se référera plus particulièrement dans la suite de la présente description. Mais le dispositif décrit peut plus généralement trouver des applications dans le cadre d'un chargement de particules solides dans un réacteur.

Par « chargement dense » on entend un chargement par effet de pluie optimisé afin de permettre de charger dans un minimum d'espace et en un minimum de temps un maximum de particules solides de façon homogène et la plus uniforme possible.

Le document JP09052630, issu du rapport de recherche préliminaire établi pour la demande française dont la priorité est ici revendiquée, décrit des capteurs fixés aux parois internes d'un réacteur, pour surveiller le chargement en particules solides de ce réacteur.

Les documents DE 10106176 et WO2004/027353, également issus du rapport de recherche préliminaire établi pour la demande française dont la priorité est ici revendiquée, décrivent l'un une sonde fixée de manière déplaçable à une paroi supérieure d'une enceinte pour surveiller le vidage de cette enceinte, l'autre un support de sonde installé sur un orifice percé dans une paroi d'une enceinte de stockage de produits du type sable ou ciment.

Le document WO 2010/076522 décrit un exemple de dispositif de distribution de particules solides dans une enceinte.

Ce dispositif de distribution est installé dans une ouverture de remplissage du réacteur situé en haut du réacteur et au centre du réacteur.

Afin de mesurer le niveau de particules solides déjà tombées dans le réacteur, on peut disposer une ou plusieurs sondes (ou capteurs) de mesure à l'intérieur du réacteur, en particulier pendant le remplissage. Plus généralement, on installe des sondes à l'intérieur du réacteur afin de mesurer des paramètres relatifs aux particules solides dans l'enceinte.

Il a été envisagé de fixer une sonde sur le dispositif de distribution de particules, et d'introduire ensuite l'ensemble dispositif de distribution plus sonde dans l'enceinte par l'ouverture de l'enceinte.

Il existe un besoin pour un procédé et un dispositif permettant davantage de souplesse dans le positionnement de la ou les sonde(s). L'une des contraintes principales à laquelle les opérateurs de ce type de matériel peuvent être confrontés est liée à l'encombrement extrême d'un réacteur qui contient usuellement des plateaux, des thermocouples et des supports pour ces éléments, et donc au faible espace dont ils disposent pour manœuvrer le dispositif.

Il est proposé un procédé de préparation de réacteur, ce réacteur définissant une ouverture pour le passage d'un dispositif de distribution de particules solides apte à réaliser un chargement du réacteur en particules solides. Le procédé comprend :
- prévoir un dispositif support de capteur tel que défini dans la revendication 1, auquel est fixé un capteur destiné à la collecte d'informations sur le chargement du réacteur,
- fixer le dispositif support de capteur à un élément du réacteur distinct du dispositif de distribution de particules solides, tel que défini dans la revendication 1.

Ainsi le capteur est-il fixé de manière amovible, sur un élément du réacteur et non sur le dispositif de distribution de particules, permettant ainsi de réduire les contraintes lors de l'introduction de ce dispositif de distribution de particules solides dans le réacteur.

Selon l'invention, ici dans le cas d'un réacteur à plateau, on prévoit une fixation au plateau, par exemple à un longeron du plateau.

Ainsi, le nombre d'éléments de plateau à soulever pour permettre l'introduction du dispositif de chargement de particules peut être plus réduit que dans l'art antérieur puisque l'encombrement associé à ce dispositif de distribution de particules n'est pas augmenté du fait de la fixation du capteur à ce dispositif de distribution.

En outre, cette fixation du capteur au plateau permet de limiter les contraintes relatives au positionnement du capteur.

Selon l'invention, la fixation du dispositif support de capteur peut être effectuée en utilisant des moyens de fixation comprenant deux parties de fixation et agencés de sorte que ces deux parties viennent de part et d'autre de l'élément de réacteur.

Avantageusement et de façon non limitative, les moyens de fixation peuvent être agencés de sorte que ces deux parties de fixation exercent des efforts sur respectivement deux surfaces opposées de l'élément de réacteur.

Ces deux surfaces peuvent avantageusement se terminer en (au moins) une extrémité de l'élément de réacteur, par exemple un bord d'un plateau, d'une poutre, ou autre.

On vient ainsi profiter de la présence d'une extrémité d'un élément de réacteur pour fixer le dispositif support de capteur autour de cette extrémité.

Les deux parties du moyen de fixation peuvent par exemple former mâchoires, de façon à venir en prise de part et d'autre d'un bord de l'élément de réacteur.

Avantageusement et de façon non limitative, le dispositif support de capteur peut être positionné sur un bord d'une ouverture définie dans le plateau, à proximité d'un coin de cette ouverture, afin d'éviter d'obstruer cette ouverture. Par « à proximité d'un coin », on entend que le dispositif support de capteur est fixé sur un coté de cette ouverture, à une distance de l'extrémité du coté représentant un tiers ou moins de la longueur de ce coté, avantageusement un quart ou moins, avantageusement un cinquième ou moins, avantageusement un dixième ou moins.

Par exemple, dans le cas d'un réacteur monolit, comprenant un seul lit de particules catalytiques (par exemple) à charger, on peut prévoir une fixation à un bord de l'enceinte du réacteur ou bien encore à un élément de réacteur distinct de l'enceinte et du dispositif de distribution, par exemple une poutre s'étendant au-dessus de l'ouverture comme par exemple un chevron fixé sur le bord du réacteur ou bien encore une poutre du bâtiment du réacteur surplombant l'ouverture du réacteur.

On peut encore prévoir que l'élément du réacteur auquel est fixée la première partie du dispositif support de capteur comprenne un chevron fixé au plateau du réacteur, ou bien encore un élément introduit dans le réacteur comme par exemple un thermocouple ou bien encore une cerce.

L'élément de réacteur est installé à l'intérieur du réacteur. Il peut par exemple s'agir d'un plateau, d'une cerce, d'un longeron, etc.

La fixation du dispositif support de capteur à l'élément de réacteur peut être amovible ou non. Dans le cas d'une fixation amovible, comme dans la présente invention, on pourra en particulier prévoir de retirer le dispositif support de capteur lorsqu'il n'est plus nécessaire d'effectuer des mesures au moyen de la sonde, par exemple une fois l'ensemble du système de réacteur installé. La fixation peut être telle que l'élément de réacteur est laissé intact lorsque le dispositif support de capteur est retiré. L'élément de réacteur auquel a été accroché le support de capteur pendant la phase de remplissage peut assurer sa fonction première pendant la phase de réaction.

En particulier, la fixation peut être non traversante.

Le support de capteur peut ainsi être fixé de manière amovible à des éléments de réacteur existants, sans qu'il soit nécessaire de modifier la forme ou la structure de ces éléments.

Le procédé peut en outre comprendre une étape d'introduction du dispositif de distribution de particules solides dans l'ouverture, et une étape de chargement du réacteur en particules solides au moyen du dispositif de distribution. Le procédé de préparation du réacteur peut ainsi aboutir au chargement de ce réacteur en particules solides.

Il est décrit un dispositif support de capteur pour un réacteur définissant une ouverture pour le passage d'un dispositif de distribution de particules solides apte à réaliser un chargement du réacteur en particules solides, ce capteur étant destiné à la collecte d'informations sur le chargement du réacteur. Le dispositif support de capteur comprend :
- une première partie conçue pour supporter le capteur,
- une deuxième partie agencée pour assurer une fixation de la première partie à un élément du réacteur distinct du dispositif de distribution de particules solides.

La deuxième partie du dispositif support de capteur comprend des moyens de fixation à l'élément de réacteur distinct du dispositif de distribution.

Ces moyens de fixation peuvent par exemple comprendre des parties de fixation disposées de façon à venir de part et d'autre de l'élément de réacteur. Par exemple, ces moyens de fixation peuvent comprendre une mâchoire apte à assurer une fixation par serrage de part et d'autre de cet élément de réacteur, ou bien encore des moyens de clipsage aptes à assurer de fixation par clipsage à cet élément de réacteur.

On peut prévoir qu'en l'absence de fixation à l'élément de réacteur, la deuxième partie du dispositif support de capteur soit solidaire de l'élément de réacteur, et en particulier soit d'une seule pièce avec l'élément de réacteur. Par exemple l'élément de réacteur, par exemple un longeron, est équipé de deux parties de mâchoire destinées à venir de part et d'autre d'une extrémité de la première partie du dispositif support de capteur, et d'un excentrique pour permettre d'appliquer une pression de part et d'autre de cette extrémité.

Avantageusement et de façon non limitative, en l'absence de fixation à l'élément de réacteur, la deuxième partie du dispositif support de capteur est solidarisée à la première partie de ce dispositif. En particulier, la première et la deuxième partie peuvent être d'une seule pièce. Ainsi, le dispositif support de capteur peut intégrer des moyens de fixation à l'élément de réacteur, de sorte que le dispositif support de capteur puisse être fixé à des éléments de réacteur du type connu de l'art antérieur, permettant ainsi d'éviter de modifier cet élément de réacteur.

La fixation entre la première partie du dispositif et l'élément de réacteur est réalisée par application d'une force de part et d'autre de l'élément de réacteur. Ainsi, l'élément de réacteur n'est pas altéré du fait d'une fixation provisoire.

L'invention n'est en rien limitée à ce type de fixation, on pourrait par exemple prévoir une fixation par vissage, par collage ou autre.

Avantageusement et de façon non limitative, la force appliquée peut être obtenue par serrage, par clipsage ou autre.

Avantageusement et de façon non limitative, le dispositif support de capteur est agencé de sorte qu'une fois la fixation avec l'élément de réacteur assurée, le capteur puisse être déporté latéralement ou dans d'autres directions par rapport à l'élément de réacteur. Par exemple le dispositif support de sonde peut comprendre des pièces mobiles les unes par rapport aux autres de façon à autoriser un mouvement du capteur par rapport à la fixation à l'élément de réacteur. Selon un autre exemple, le dispositif support de capteur peut être agencé de façon à interdire tout mouvement du capteur par rapport au moyen de fixation : un tel dispositif rigide peut par exemple avoir une forme particulière, de sorte qu'une fois fixé à l'élément de réacteur, le capteur se retrouve éloigné de l'ouverture.

Ainsi, cet agencement peut permettre de libérer de l'espace sur le passage du dispositif de distribution de particules solides. En particulier lorsque le dispositif support de capteur est fixé à un plateau du réacteur, le capteur peut être disposé sous ce plateau, limitant ainsi l'encombrement au niveau de l'ouverture du réacteur, pour le passage du dispositif de distribution de particules solides.

Avantageusement et de façon non limitative, le dispositif support de capteur est agencé de façon à permettre un pivotement d'une portion au moins de ce dispositif support de capteur de façon à pouvoir déplacer le capteur latéralement lorsque le dispositif support de capteur est fixé. Ainsi, le dispositif support de capteur peut être fixé à l'élément de réacteur alors que le capteur a une première position, puis on peut pivoter une portion du dispositif support de capteur afin que le capteur adopte une deuxième position, cette deuxième position étant avantageusement choisie de façon à limiter les contraintes pour l'installation d'autres pièces, et notamment pour l'installation du dispositif de distribution de particules par l'ouverture du réacteur.

Dans la présente demande les termes « haut » « bas » « supérieur « inférieur » « vertical » « horizontal », « latéral » « dessus » « dessous » etc. sont définis au sens classique de ces termes, c'est-à-dire que la direction verticale est la direction du vecteur gravité, ce vecteur gravité étant orienté du haut vers le bas, pour un dispositif placé dans des conditions attendues d'utilisation. Bien entendu, ce dispositif peut être transporté, vendu, etc. avec une orientation différente.

Avantageusement et de façon non limitative, le dispositif support peut comprendre un arbre et la première partie peut être agencée de sorte que le capteur soit déporté par rapport à cet arbre. L'arbre s'étend dans une direction longitudinale. Lorsque le dispositif support de capteur est fixé, la direction longitudinale de l'arbre peut être proche de la direction verticale du vecteur gravité. Dans la présente demande, afin de ne pas alourdir la description, le terme « vertical » est susceptible d'être utilisé en lieu et place du terme « longitudinal ». Par exemple, on pourra parler abusivement d'arbre vertical du dispositif alors que le dispositif peut être stocké, commercialisé et même installé sur un réacteur avec son arbre orienté selon une direction non parallèle à celle du vecteur gravité.

La première partie peut par exemple comprendre un bras support de sonde solidarisé à l'arbre et s'étendant dans une direction ayant une composante non parallèle à la direction longitudinale, par exemple s'étendant dans un plan horizontal.

Le dispositif support de capteur peut être agencé de façon à autoriser un déplacement de la première partie par rapport à l'arbre, par exemple une translation, un pivotement, et/ou autre. Ceci peut permettre davantage de souplesse lors de l'installation de différentes pièces dans le réacteur ou autour du réacteur.

En particulier, on peut installer le support de capteur avant le dispositif de distribution de particules solides, puisque le passage pour ce dispositif de distribution de particules solides peut ensuite être dégagé.

Plus généralement, un tel dispositif support de capteur peut permettre de dissocier l'installation du dispositif support de capteur et l'installation du dispositif de distribution de particules solides.

L'invention n'est en rien limitée par le caractère déporté du capteur par rapport à une verticale passant par la fixation à l'élément de réacteur. On pourra par exemple prévoir un support de capteur s'étendant verticalement, relativement étroit et placé dans un coin d'une ouverture de plateau de façon à ne pas venir obstruer le passage pour le dispositif de distribution de particules.

Avantageusement et de façon non limitative, le dispositif support de capteur peut comprendre des moyens de fixation à l'élément de réacteur, par exemple des mâchoires, agencés pour venir appliquer une force de part et d'autre de l'élément de réacteur. Les parties de mâchoire de fixation peuvent par exemple venir en prise sur un bord du plateau.

Avantageusement et de façon non limitative, le dispositif support de capteur est agencé de façon à autoriser un réglage des forces appliquées par les parties formant mâchoire de fixation. Ceci peut notamment permettre de s'adapter à des éléments de réacteur ayant des dimensions variées.

Avantageusement et de façon non limitative, on peut prévoir des premiers moyens de réglage pour assurer un réglage grossier des parties formant mâchoire de fixation, puis des deuxièmes moyens de réglage pour assurer un réglage plus fin de ces parties formant mâchoire de fixation. Ceci peut permettre de faciliter la fixation à l'élément de réacteur, et notamment de réaliser l'opération de fixation plus rapidement.

Avantageusement et de façon non limitative, les premiers moyens de réglage peuvent comprendre des moyens de fixation de(s) mâchoire(s) à l'arbre du dispositif support de capteur. On pourra par exemple prévoir des leviers excentriques pour bloquer une extrémité de chaque ou d'au moins une partie de mâchoire sur un axe vertical, par exemple l'arbre, du dispositif support de capteur.

Avantageusement et de façon non limitative, les deuxièmes moyens de réglage peuvent comprendre au moins une vis disposée de façon à appliquer une force ayant une composante non nulle dans la direction de la force de serrage des parties formant mâchoire. La vis de blocage peut par exemple être disposée dans le sens de cette direction de serrage, et de sorte que lorsque cette vis est tournée, l'extrémité de la vis vient appuyer sur un élément de mâchoire et sur l'élément de réacteur.

Avantageusement et de façon non limitative, on pourra prévoir deux vis pour ce réglage fin, chacune des vis permettant d'appliquer une force sur la partie de mâchoire correspondante. En pratique, on pourra utiliser simplement une vis lors d'un réglage, l'autre vis étant prévue en sécurité, pour le cas où la première vis serait défaillante. On pourra alors prévoir d'effectuer le réglage à partir de la deuxième vis. Ceci peut permettre d'éviter de perdre du temps à remplacer les pièces en cas de défaillance.

Avantageusement de façon non limitative, le dispositif support de capteur est agencé de façon à permettre un réglage en hauteur.

Avantageusement et de façon non limitative, l'arbre vertical du dispositif support de capteur peut comprendre deux pièces montées coulissantes l'une par rapport à l'autre, par exemple deux tubes aptes à coulisser l'un dans l'autre. En particulier, on peut prévoir d'autoriser un déplacement vertical des tubes l'un par rapport à l'autre, ce qui peut permettre le réglage en hauteur.

Avantageusement, des moyens de verrouillage permettent de bloquer ces pièces l'une par rapport à l'autre. On pourra par exemple doter le tube interne de trous et le tube externe d'une goupille pour assurer le blocage une fois la hauteur souhaitée atteinte.

Les tubes peuvent avoir une section carrée, ou autre, mais avantageusement on prévoira des tubes avec une section circulaire.

On pourra aussi prévoir d'autoriser le pivotement du tube externe par rapport au tube interne. En particulier, le tube externe peut être solidaire d'une pièce supportant le capteur et s'étendant dans une direction ayant au moins une composante non verticale, de sorte que ce pivotement puisse permettre le déplacement latéral du capteur, et en particulier d'escamoter le capteur de façon à libérer du passage pour le dispositif de distribution de particules solides.

Avantageusement et de façon non limitative, le dispositif support de sonde peut être agencé pour autoriser le déplacement du capteur de façon à modifier la distance du capteur à l'axe vertical.

Par exemple, dans le cas d'un bras support de sonde s'étendant dans une direction ayant une composante non verticale, par exemple un bras support de sonde s'étendant dans un plan horizontal, on pourra prévoir un réglage en translation. En particulier, le dispositif support de sonde peut comprendre une noix solidarisant le bras support de sonde à un arbre vertical, de façon à autoriser le coulissement du bras support de sonde dans cette noix et à assurer le blocage, une fois la distance du capteur à l'arbre souhaitée atteinte.

Par exemple, le dispositif support de capteur peut être agencé de façon à autoriser le pivotement du bras support de capteur autour d'un axe perpendiculaire à l'axe de l'arbre vertical, c'est-à-dire autour d'un axe dans un plan horizontal. Le bras support de capteur peut ainsi pivoter autour de cet axe entre une position sensiblement verticale, dans laquelle le capteur est relativement proche de l'arbre du dispositif support, et une position horizontale, dans laquelle le capteur est déporté par rapport à l'arbre vertical du dispositif support.

Avantageusement et de façon non limitative, on peut prévoir un système d'engrenage et de crémaillère pour piloter ce pivotement. On pourra par exemple prévoir des moyens de manœuvre relativement accessibles, par exemple un carré de manœuvre relié par une pièce de liaison vis et crémaillère à un système d'engrenage et crémaillère solidaire du bras support de sonde. Le système engrenage et crémaillère peut ainsi être piloté par une rotation autour d'un axe vertical.

Avantageusement et de façon non limitative, le dispositif support de sonde est agencé de façon à supporter une sonde de plus de un kilogramme.

Il est en outre proposé une utilisation du dispositif support de capteur décrit ci-dessus pour le chargement d'un réacteur en particules solides, et avantageusement pour le chargement dense d'un réacteur pétrochimique.

Il est en outre proposé un système de réacteur comprenant un réacteur, un dispositif support de capteur tel que décrit ci-dessus, ainsi éventuellement que le capteur supporté par ce dispositif.

L'invention sera mieux comprise en référence aux figures, lesquelles illustrent de modes de réalisation de l'invention.
La figure 1 est une vue en coupe d'un exemple de système de réacteur selon un mode de réalisation de l'invention.
La figure 2 montre un exemple de dispositif support de capteur selon un mode de réalisation de l'invention.
La figure 3 montre un exemple de dispositif support de capteur selon un autre mode de réalisation de l'invention.
La figure 4 est une vue de dessus d'une partie d'un exemple de système de plateau de réacteur, selon un mode de réalisation de l'invention.

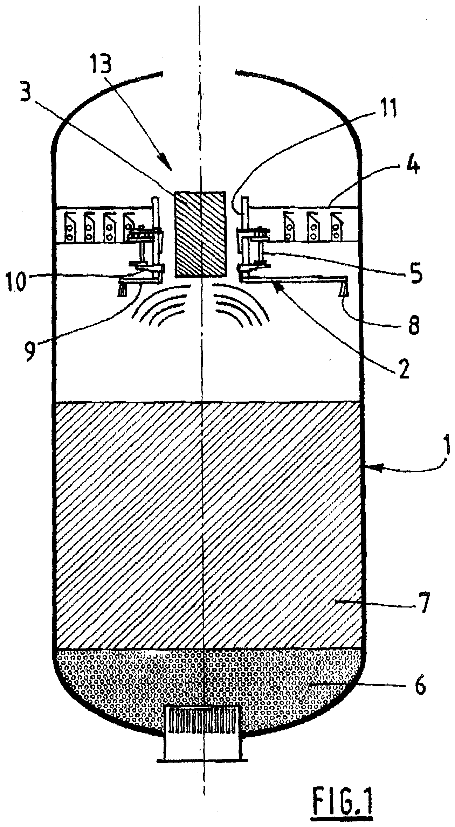

En référence à la figure 1, un réacteur 1 définit une ouverture 13 pour le passage d'un dispositif de distribution 3 de particules solides, 6, 7. Le dispositif de distribution 3 peut être du type de celui décrit dans le document WO 2010/076522.

Ce réacteur 1 mesure environ 5 ou 6 mètres de hauteur ou plus selon les cas, et sa base a un diamètre de l'ordre de 3 ou 4 mètres ou plus selon les cas.

Le dispositif de distribution 3 permet le chargement du réacteur 1 en billes inerte 6, et également en particules de catalyseur 7.

Ce type de réacteur 1 peut notamment être utilisé dans l'industrie pétrochimique. Il peut par exemple s'agir d'un réacteur pétrochimique dans lequel une charge d'hydrocarbures s'écoule à travers le lit de catalyseur 7 et le lit de billes inerte 6. Les particules solides de catalyseur peuvent être des billes extrudées poreuses comprenant usuellement des composés métalliques.

Une fois les lits catalytiques 6, 7 chargés, on retire le dispositif de distribution 3 et un flux d'hydrocarbures qui peut être liquide et/ou gazeux, s'écoule à travers ce réacteur 1.

Les lits catalytiques 6, 7 doivent être remplacés régulièrement, par exemple tous les ans ou tous les deux ans voire moins souvent selon les cas.

Pour des raisons de coûts et de productivité, on cherche à limiter autant que faire ce peut le temps de préparation du réacteur 1.

Lors du chargement des particules solides 6, 7, des capteurs 8 sont installés dans le réacteur 1 afin de surveiller le déroulement du chargement des produits chargés dans le réacteur.

Par produits chargés dans le réacteur, ou chargement du réacteur, on entend les particules solides distribuées dans le réacteur par le dispositif de distribution, par exemple les lits 6, 7, de la figure 1, les réactifs et produits au sens chimique du terme, et/ou autre.

Les capteurs 8, dont le nombre peut varier de 1 à quatre ou cinq selon les cas, peuvent par exemple permettre de mesurer le niveau du lit catalytique 7, de détecter des éventuelles variations de niveau. Si la surface de remplissage présente un relief, on peut prévoir de commander la distribution des particules solides de façon à remédier à ce relief, par exemple en conférant aux particules à charger davantage de vitesse, de sorte que les particules viennent remplir les creux latéraux.

Les capteurs 8 peuvent par exemple comprendre des capteurs laser, des caméras, des capteurs H₂S, des radars, des capteurs ultrasonores et/ou autres.

Dans le cas d'un capteur laser, le capteur comporte des moyens d'émission d'un rayonnement laser aptes à émettre un signal vers les différents points de la surface de remplissage, des moyens de réception laser et des moyens de traitement (non représentés à la figure 1) afin d'estimer la hauteur de ces points de la surface de remplissage.

Chaque capteur 8 peut par exemple être une sonde de mesure haute d'environ 30 centimètres et pesant près de 2 kilogrammes ou plus selon les cas.

Ces sondes 8 sont fixées à des supports de sonde 2 respectifs. Ces supports de sonde 2 comprennent une première partie 9, ou bras support de sonde, apte à supporter une sonde 8. Ces dispositifs support de sonde 2 comportent en outre une partie 11 comprenant des moyens de fixation à un élément du réacteur. Ces moyens de fixation comprennent ici des parties de fixation 10 formant mâchoire, aptes à venir exercer une force de part et d'autre d'un longeron 5 d'un plateau 4 du réacteur 1.

Les bras supports de sonde 9 sont solidarisés à des arbres verticaux respectifs non référencés sur la figure 1 sur lesquels sont montées les parties de mâchoire respectives 10.

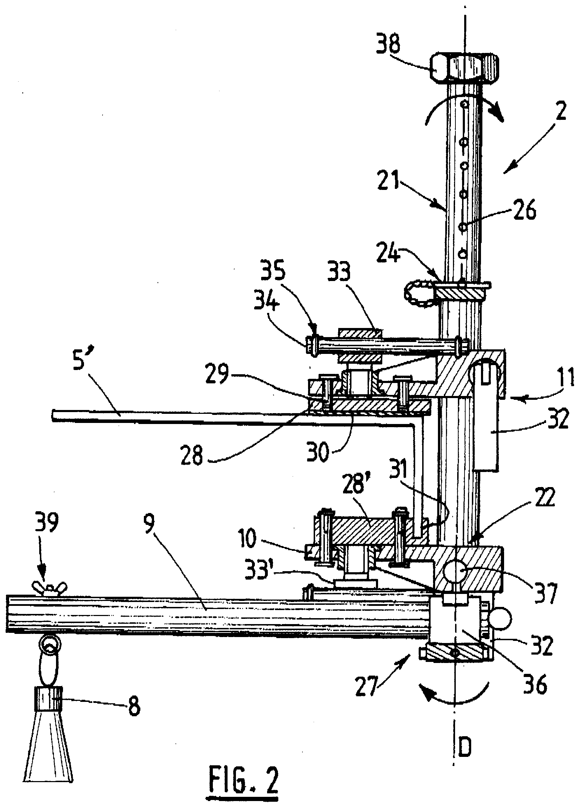

Un dispositif support de sonde 2 sera mieux décrit en référence à la figure 2, laquelle est une vue en coupe plus détaillée d'un exemple de ce dispositif.

En référence à cette figure 2, le dispositif support de sonde 2 comprend un arbre vertical avec un tube interne 21 et un tube externe 22 aptes à coulisser l'un dans l'autre. Le tube interne 21 a un diamètre extérieur légèrement inférieur au diamètre intérieur du tube externe 22. Les tubes 21, 22 peuvent ainsi coulisser verticalement l'un par rapport à l'autre, ce qui permet un réglage en hauteur.

En outre, les tubes 21, 22 peuvent pivoter l'un par rapport à l'autre, autour de l'axe longitudinal D. Le dispositif 2 est ici orienté de sorte que l'axe longitudinal soit vertical.

Des lumières 26 percées à intervalle régulier dans le tube évidé 21 permettent à l'aide d'une goupille demi-lune 24 un blocage rapide à la position verticale souhaitée.

Le dispositif support de sonde peut comprendre un système de serrage non représenté pour venir bloquer en rotation le tube extérieur 22 une fois que ce dernier est bien positionné. On pourra par exemple prévoir deux vis de serrage non représentées aptes à venir appliquer des efforts contre le tube externe de façon à empêcher le pivotement de ce tube externe par rapport au tube interne, malgré les vibrations éventuelles. On pourra alternativement prévoir un verrouillage au moyen d'un excentrique non représenté.

Le tube interne 21 s'étend au-delà de l'extrémité du tube externe 22.

Sur le tube interne 21 est fixée une bague de butée d'arrêt 27 de diamètre supérieur au diamètre du tube externe 22. Cette bague de butée d'arrêt permet d'assurer une fonction de sécurité anti chute. Même si la goupille 24 n'est fixée dans aucune lumière 26, la bague de butée d'arrêt 27 permet, en cours d'installation d'empêcher la chute du tube 22 dans le réacteur.

Le dispositif 2 comprend deux parties de mâchoire 10 pour venir appliquer des efforts de part et d'autre d'une poutre de réacteur 5', sur des surfaces horizontales respectives de cette poutre 5', de dimensions très différentes dans cet exemple, ces surfaces horizontales se terminant en une surface d'extrémité verticale. A ces parties de mâchoire 10 sont fixées des semelles 28, 28', au moyen de vis de semelle 29.

Ces parties de mâchoire de fixation peuvent permettre une fixation à des éléments de réacteur ayant des formes variées. En particulier, ces parties de mâchoire peuvent permettre une fixation sur des éléments ayant des épaisseurs variables, permettant ainsi de s'affranchir notamment des différentes formes de plateaux ou autres surfaces sur lesquelles elles peuvent s'appuyer.

En outre les semelles 28, 28' prévues entre les parties de mâchoire et l'élément de réacteur peuvent avoir une forme adaptée à l'élément de réacteur. Par exemple dans le cas (non représenté) d'un élément de réacteur à section circulaire on pourra prévoir des semelles destinées à ajuster la mâchoire, par exemple avec une surface de forme complémentaire de celle de la surface de l'élément de réacteur circulaire.

Pour revenir à la figure 2, les semelles 28 et 28' peuvent être adaptées au type de poutre de réacteur 5', par exemple la semelle 28 comprend une partie tampon en caoutchouc 30 destinée à venir contre une surface plane de la poutre 5', tandis que la semelle 28' comprend une rainure conformée pour recevoir une extrémité 31 d'une partie verticale de la poutre 5'.

On peut relever que cette forme de semelle 28' avec une rainure est adaptée non seulement à la fixation contre une poutre 5' ayant une extrémité d'une partie verticale mais également à la fixation d'une poutre présentant une surface inférieure plane.

Deux leviers excentriques 32 permettent de bloquer les deux parties de mâchoire 10 respectives. Les parties de mâchoire 10 définissent en effet chacune une ouverture pour recevoir le tube externe 22. Cette ouverture peut avoir un diamètre proche du diamètre externe du tube 22, de façon à autoriser le coulissement de la partie de mâchoire 10 sur le tube externe 22. Ainsi, lorsque le levier excentrique 32 est relevé, il est possible de régler la hauteur de la partie de mâchoire 10 correspondante. Lorsque la partie de mâchoire 10 est à la position souhaitée, le levier excentrique est abaissé, ce qui bloque la partie de mâchoire 10 sur le tube 22.

Après ce premier réglage grossier de la position des parties de mâchoire 10, on peut prévoir en outre un réglage plus fin au moyen d'une vis de blocage 33. Cette vis de blocage peut être tournée autour d'un axe vertical, au moyen d'une tige de blocage 34. Cette tige de blocage est relativement longue de façon à permettre une prise facile.

Au fur et à mesure que la vis de blocage est tournée dans un sens donné, cette vis 33 exerce des efforts sur la semelle 28. Ainsi, cette vis 33 permet d'assurer un réglage fin des efforts appliqués sur la poutre de réacteur 5'.

La tige de blocage 34 est apte à coulisser horizontalement dans une ouverture de la tête de la vis de blocage 33. L'opérateur fait ainsi tourner la vis de blocage sur une certaine plage angulaire, puis, lorsque la tige de blocage est approchée de l'arbre vertical 21, 22, l'opérateur fait coulisser cette tige horizontalement, de façon à pouvoir continuer la rotation de la vis de blocage 33. La tige de blocage 34 coulissante peut ainsi s'adapter à l'encombrement effectif lors de l'installation du capteur.

La tige de blocage 34 est pourvue de joints toriques d'arrêt 35 à ses extrémités afin d'éviter la chute de la tige de blocage dans le réacteur.

Le dispositif 2 est en outre fourni avec une vis de blocage supplémentaire 33', similaire à la vis de blocage 33. Cette vis de blocage supplémentaire 33' est prévue en sécurité, pour le cas où la vis de blocage 33 serait défaillante.

La première partie du dispositif support de sonde comporte des moyens de fixation 39 à la sonde 8, par exemple un crochet fixé dans un trou du bras de sonde 9 au moyen d'une vis.

Une noix de fixation 36 permet de faire coulisser le bras support de sonde dans un plan horizontal de façon à rapprocher ou éloigner la sonde 8 du tube 22. Une vis violon de blocage 37 permet d'assurer le verrouillage horizontal du bras 9.

Un écrou 38 soudé sur le tube 21 permet d'éviter de perdre le tube 22 ainsi que les parties de mâchoire 10 et le bras 9, lors du transport du dispositif support de sonde 2.

En ce qui concerne l'installation de la sonde 8 dans le réacteur, on peut par exemple proposer la procédure décrite ci-dessous.

Le dispositif support de sonde 2 est tout d'abord introduit dans le réacteur 1 par l'opérateur. Les parties de mâchoire 10 sont écartées l'une de l'autre et l'opérateur vient positionner le support de sonde 2 de façon à ce que la mâchoire inférieure vienne contre le dessous de la poutre 5', par exemple qu'une rainure d'une semelle 28' reçoive une extrémité 31 d'une partie verticale de la poutre 5'. La partie de mâchoire supérieure est ensuite descendue le long du tube 22, jusqu'à atteindre une surface supérieure de la poutre 5'. Puis le levier excentrique 32 est abaissé de façon à maintenir la partie de mâchoire supérieure dans cette position L'opérateur tourne ensuite la vis de blocage 33 jusqu'à ce que les parties de mâchoire 10 exercent une force suffisante contre la poutre 5'. Le dispositif support de sonde est ainsi fixé au plateau.

Il reste alors à assurer le positionnement de la sonde 8.

Le tube interne 21 peut être descendu ou remonté par rapport à la poutre 5'. Il est ainsi possible de réaliser un réglage en hauteur. Des moyens de verrouillage, ici la goupille 24, permettent de bloquer en hauteur le tube 22 sur le tube 21.

Le tube interne 21 peut en outre être pivoté à l'intérieur du tube 22. Le bras 9 étant solidaire du tube 21, l'opérateur manipulant le tube 21 peut placer le capteur 8 sous le plateau plutôt qu'au niveau de l'ouverture. Des vis non représentées permettent de bloquer cette rotation autour de l'axe D.

Enfin le bras 9 peut être translaté de façon à ajuster la distance de la sonde 8 à cet axe vertical D. La vis 37 permet de bloquer cette translation du bras 9.

Le dispositif 2 permet ainsi une certaine liberté de positionnement de la sonde. Ceci peut permettre de s'affranchir des contraintes de positionnement dans le réacteur en cours d'installation et donc une meilleure adaptabilité aux différentes configurations du système de réacteur.

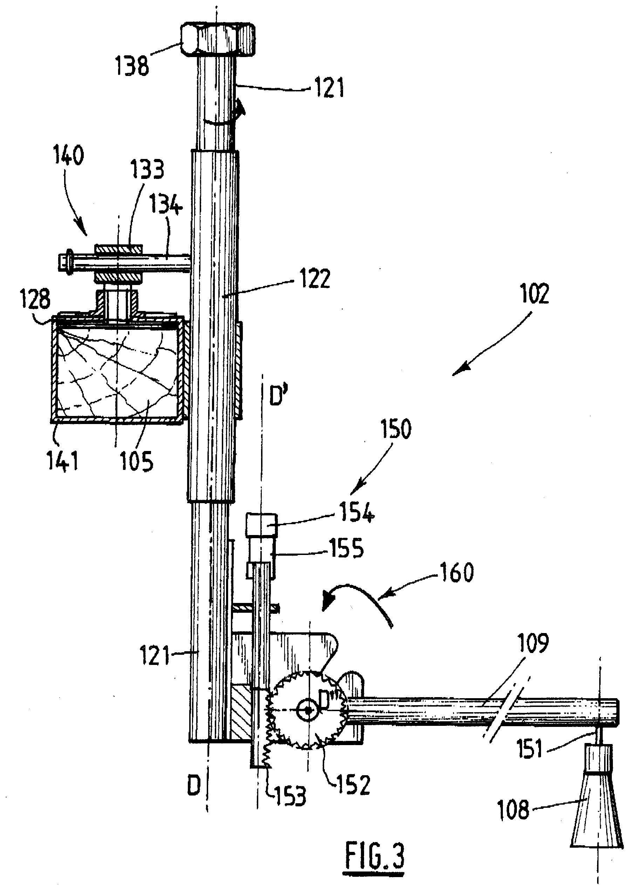

La figure 3 est une vue en coupe d'un exemple d'un dispositif support de sonde selon un autre mode de réalisation de l'invention.

En référence à la figure 3 le dispositif support de sonde 102 comporte deux tubes coulissant l'un dans l'autre 121, 122.

Un moyen 140 de fixation à un élément 105 est monté sur le tube 122.

Dans l'exemple représenté, l'élément de réacteur 105 comprend un chevron en bois destiné à être posé au-dessus d'une ouverture de plateau d'un réacteur de façon à supporter un dispositif de distribution de particules solides.

Le moyen 140 comprend une tôle 141 conformée pour recevoir le chevron 105, et une vis de blocage 133 similaire à la vis de blocage 33 de la figure 2.

Lorsque l'utilisateur tourne une tige 134 de façon à enfoncer la vis 133 des efforts sont appliqués sur une semelle 128 disposée entre le chevron 105 et la tôle 141. Ainsi des efforts s'appliquent de part et d'autre du chevron 105.

Le dispositif comporte ainsi deux parties de fixation, à savoir la surface inférieure de la tôle 141 et la semelle 128, venant en prise contre deux surfaces opposées du chevron 105, ici les surfaces supérieure et inférieure. Ces surfaces se terminent en deux surfaces d'extrémité verticales.

Le dispositif 102 comporte en outre un écrou 138 à une extrémité du tube 121 ainsi qu'une bague de butée d'arrêt non représentée, à une extrémité inférieure du tube 121, pour empêcher de perdre le tube 122 et les éléments y attenant, et pour empêcher de perdre également une première partie 150 comprenant le bras support de sonde et les moyens de fixation de ce bras sur le tube 121.

Outre la forme des moyens de fixation à l'élément de réacteur, le mode de réalisation de la figure 3 se distingue du mode de réalisation de la figure 2 notamment par la possibilité de mouvement du bras support de sonde 109.

La première partie 150 comprend le bras support de sonde 109 ainsi qu'un maillon de chaîne 151 permettant une mise en verticalité de la sonde 108.

Le bras support de sonde est solidarisé à une roue dentée 152 dont les dents sont en prise avec une crémaillère 153. Les dents de la crémaillère ont une forme telle que lorsqu'un carré de manœuvre 154 et une pièce de liaison 155 sont entraînée en rotation par un opérateur autour d'un axe vertical D', la crémaillère 153 entraîne la rotation de la roue dentée 152 autour d'un axe D" perpendiculaire au plan de la figure, selon la flèche 160. Le bras support de sonde peut alors pivoter entre une position horizontale représentée sur la figure 3 et une position verticale dans laquelle le bras support de sonde est sensiblement parallèle à la direction verticale.

En ce qui concerne l'installation du dispositif support de sonde, on peut par exemple proposer la procédure suivante :
- Le dispositif support de sonde 102 est introduit dans le réacteur par un ou deux opérateurs présents sur le plateau du réacteur. Ces opérateurs commencent par introduire le chevron 105 et la semelle 128 dans la tôle 141, la vis de serrage 133 étant en position desserrée, puis manipulent cette vis 133 de façon à assurer la fixation.
- La hauteur du tube 122 par rapport au tube 121 est ajustée. On peut aussi prévoir de faire pivoter le tube 121 autour de la direction verticale D' de façon à effectuer un premier positionnement de la partie support de sonde 109. Puis une goupille et des vis de serrage non représentés viennent empêcher tout déplacement du tube 122 par rapport au tube 121.
- Enfin, l'opérateur manipule le carré de manœuvre 154 de façon à faire descendre le bras de sonde dans la position souhaitée.

Le dispositif support de sonde peut en outre être pourvu d'un collier de sécurité (non représenté) destiné à être enroulé autour du cou ou du bras de l'opérateur afin d'empêcher toute chute malencontreuse du dispositif support dans le réacteur.

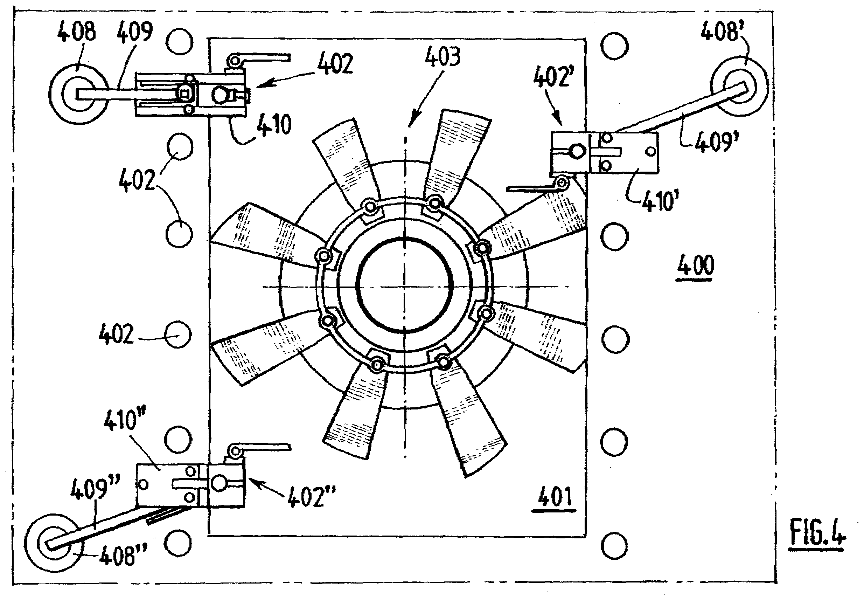

En référence à la figure 4, le plateau de réacteur 400 définit une ouverture 401 obtenue en retirant des dalles du plateau 400. Cette ouverture 401 a une forme rectangulaire.

Le plateau de réacteur comporte des cheminées d'écoulement 432 de façon connue.

Ont été fixés à ce plateau de réacteur 400 trois dispositifs support de capteur 402, 402', 402". Ces dispositifs support de réacteurs comprennent des mâchoires 410, 410', 410" enserrant le plateau 400 ainsi que des arbres verticaux, perpendiculaires au plan de la figure et s'étendant à l'intérieur du réacteur. Les dispositifs 402, 402', 402" comportent en outre des bras support de sonde respectifs 409, 409', 409" à l'extrémité desquels des sondes respectives 408, 408', 408" sont suspendues. Ces bras 409, 409', 409" sont orientés de façon à venir sous le plateau et à libérer l'espace via l'ouverture 401 passage d'un dispositif de chargement de particules 403.

Les dispositifs support de sonde 409, 409', 409" et le dispositif de distribution de particules 403 peuvent donc être installés indépendamment les uns des autres, ce qui peut permettre de conférer davantage de liberté de manœuvre lors de l'installation.

En outre, en évitant de fixer les dispositifs support de sonde sur le dispositif de distribution de particules, on peut éviter le retrait de dalles ou plateaux supplémentaires puisque l'encombrement du système à introduire via l'ouverture 401 est relativement réduit.

Le dispositif support de sonde permet donc une mise en œuvre relativement facile rapide et une certaine adaptabilité aux différentes situations susceptibles d'être rencontrées.

Dans une variante non représentée, le dispositif support de capteur peut comprendre des moyens de graduation pour permettre à l'opérateur d'évaluer l'orientation du tube externe. Ces moyens de graduation peuvent par exemple comprendre un marqueur solidaire du tube interne et apte à se déplacer par rapport à un marquage solidaire du tube externe.

## Revendications

1. Procédé de préparation d'un réacteur (1), ledit réacteur définissant une ouverture (13) pour le passage d'un dispositif de distribution de particules solides (3) apte à réaliser un chargement du réacteur en particules solides (6, 7), comprenant :
- prévoir un dispositif support de capteur (2) auquel est fixé un capteur, ledit capteur étant destiné à la collecte d'informations sur le chargement du réacteur, ledit dispositif support de capteur comprenant une première partie (9) conçue pour supporter le capteur (8) et une deuxième partie (11) agencée pour assurer une fixation amovible de la première partie à un élément du réacteur (5) distinct du dispositif de distribution de particules solides, la deuxième partie comportant des moyens de fixation (10, 140) à l'élément de réacteur (5') agencés de façon à venir appliquer une force de part et d'autre dudit élément de réacteur,
- fixer de manière amovible le dispositif support de capteur audit élément du réacteur (5) distinct du dispositif de distribution de particules solides, cet élément du réacteur étant un plateau (4) du réacteur installé à l'intérieur du réacteur.

2. Procédé selon la revendication 1, dans lequel le dispositif support de capteur (402, 402', 402") est fixé sur un bord d'une ouverture (401) définie dans le plateau (400), à proximité d'un coin de ladite ouverture.

3. Procédé selon l'une des revendications 1 ou 2, comprenant en outre
- introduire le dispositif de distribution de particules solides (3) dans l'ouverture (13),
- charger le réacteur (1) en particules solides (6, 7) au moyen du dispositif de distribution.

4. Système de réacteur comprenant
un réacteur (1) définissant une ouverture (13) pour le passage d'un dispositif de distribution de particules solides (3) apte à réaliser un chargement du réacteur en particules solides,
un capteur (8) destiné à la collecte d'informations sur le chargement du réacteur, et
un dispositif support de capteur (2) comprenant:
- une première partie (9) conçue pour supporter le capteur (8),
- une deuxième partie (11) agencée pour assurer une fixation amovible de la première partie à un élément du réacteur (5) distinct du dispositif de distribution de particules solides, la deuxième partie comportant des moyens de fixation (10, 140) à l'élément de réacteur (5') agencés de façon à venir appliquer une force de part et d'autre dudit élément de réacteur,
l'élément du réacteur étant un plateau (4) du réacteur installé à l'intérieur du réacteur.

5. Système de réacteur selon la revendication 4, comprenant
des premiers moyens de réglage (32) pour assurer un réglage grossier des moyens de fixation (10) de part et d'autre de l'élément de réacteur (5'), et
des deuxièmes moyens de réglage (33) pour assurer un réglage fin de la force appliquée sur l'élément de réacteur.

6. Système de réacteur selon l'une des revendications 4 ou 5, dans lequel ledit dispositif est agencé de sorte qu'une fois la première partie (9) fixée à un élément de réacteur (5), le capteur (8) puisse être déporté latéralement par rapport à la fixation audit élément de réacteur.

7. Système de réacteur selon la revendication 6, dans lequel
la deuxième partie comporte un arbre (21, 22) s'étendant suivant une direction longitudinale (D), et
la première partie comprend un bras support de sonde (9) solidarisé à l'arbre et s'étendant dans une direction ayant une composante non parallèle à la direction longitudinale.

8. Système de réacteur selon la revendication 7, dans lequel
le bras support de sonde (109) est monté pivotant autour d'un axe (D") ayant une composante non parallèle à la direction longitudinale (D).

9. Système de réacteur selon l'une des revendications 7 ou 8, dans lequel le bras support de sonde (109) est monté coulissant par rapport à l'arbre (21, 22), de façon à autoriser les déplacements en translation suivant une direction ayant une composante non parallèle à la direction longitudinale (D).

10. Système de réacteur selon l'une des revendications 7 à 9, dans lequel l'arbre comprend un tube interne (21 ; 121) et un tube externe (22 ;122), le tube interne étant monté dans le tube externe de façon à pouvoir pivoter autour de l'axe longitudinal (D).

11. Système de réacteur selon l'une des revendications 4 à 10, dans lequel le dispositif comprend au moins deux pièces (21, 22 ; 121, 122) montées coulissantes l'une par rapport à l'autre suivant une direction de hauteur (D), et des moyens de verrouillage (24) pour bloquer en hauteur lesdites pièces l'une par rapport à l'autre.

## Patentansprüche

1. Verfahren zur Vorbereitung eines Reaktors (1), wobei der Reaktor eine Öffnung (13) für den Durchgang einer Feststoffpartikelverteilungsvorrichtung (3) definiert, die geeignet ist, ein Laden des Reaktors mit Feststoffpartikeln (6, 7) durchzuführen; das umfasst:
- Vorsehen einer Sensorträgervorrichtung (2), an der ein Sensor angebracht ist, wobei der Sensor zum Sammeln von Informationen über das Laden des Reaktors bestimmt ist, wobei die Sensorträgervorrichtung einen ersten Teil (9) umfasst, der zum Tragen des Sensors (8) ausgelegt ist, und einen zweiten Teil (11), der eingerichtet ist, um eine abnehmbare Befestigung des ersten Teils an einem Element des Reaktors (5) sicherzustellen, der von der Feststoffpartikelverteilungsvorrichtung getrennt ist, wobei der zweite Teil Mittel (10, 140) zum Befestigen an dem Reaktorelement (5') umfasst, die derart eingerichtet sind, dass auf beide Seiten des Reaktorelements eine Kraft ausgeübt wird,
- abnehmbares Anbringen der Sensorträgervorrichtung an dem Element (5) des Reaktors getrennt von der Feststoffpartikelverteilungsvorrichtung, wobei dieses Element des Reaktors eine Platte (4) ist, die in dem Inneren des Reaktors installiert ist.

2. Verfahren nach Anspruch 1, wobei die Sensorträgervorrichtung (402, 402', 402") an einem Rand einer Öffnung (401) befestigt ist, die in der Platte (400) in der Nähe einer Ecke der Öffnung definiert ist.

3. Verfahren nach einem der Ansprüche 1 oder 2, das außerdem umfasst
- Einführen der Feststoffpartikelverteilungsvorrichtung (3) in die Öffnung (13),
- Laden des Reaktors (1) mit Festpartikeln (6, 7) mittels der Verteilungsvorrichtung.

4. Reaktorsystem, das umfasst
einen Reaktor (1), der eine Öffnung (13) für den Durchgang einer Feststoffpartikelverteilungsvorrichtung (3) definiert, die dazu geeignet ist, ein Laden des Reaktors mit Feststoffpartikeln durchzuführen,
einen Sensor (8), der dazu bestimmt ist, Informationen über das Laden des Reaktors zu sammeln, und
eine Sensorträgervorrichtung (2), die umfasst:
- einen ersten Teil (9), der ausgelegt ist, um den Sensor (8) zu tragen,
- einen zweiten Teil (11), der eingerichtet ist, um eine abnehmbare Befestigung des ersten Teils an einem Element des Reaktors (5), das von der Feststoffpartikelverteilungsvorrichtung getrennt ist, sicherzustellen, wobei der zweite Teil Mittel (10, 140) zum Befestigen an dem Reaktorelement (5') umfasst, die derart angeordnet sind, dass sie auf beide Seiten des Reaktorelements eine Kraft ausüben kommen,
wobei das Element des Reaktors eine Platte (4) ist, die in dem Inneren des Reaktors installiert ist.

5. Reaktorsystem nach Anspruch 4, das umfasst
erste Einstellmittel (32), um eine Grobeinstellung der Befestigungsmittel (10) zu beiden Seiten des Reaktorelements (5') sicherzustellen, und
zweite Einstellmittel (33), um eine Feineinstellung der Kraft, die auf das Reaktorelement ausgeübt wird, sicherzustellen.

6. Reaktorsystem nach einem der Ansprüche 4 oder 5, wobei die Vorrichtung derart eingerichtet ist, dass, sobald der erste Teil (9) an einem Reaktorelement (5) befestigt ist, der Sensor (8) seitlich in Bezug auf die Befestigung an dem Reaktorelement versetzt werden kann.

7. Reaktorsystem nach Anspruch 6, wobei
der zweite Teil eine Welle (21, 22) umfasst, die sich entlang einer Längsrichtung (D) erstreckt, und
der erste Teil einen Sondenträgerarm (9) umfasst, der fest an der Welle befestigt ist und sich in eine Richtung erstreckt, die eine Komponente aufweist, die zu der Längsrichtung nicht parallel ist.

8. Reaktorsystem nach Anspruch 7, wobei
der Sondenträgerarm (109) um eine Achse (D") schwenkend montiert ist, die eine Komponente aufweist, die zu der Längsrichtung (D) nicht parallel ist.

9. Reaktorsystem nach einem der Ansprüche 7 und 8, wobei der Sondenträgerarm (109) in Bezug auf die Welle (21, 22) verschiebbar derart montiert ist, dass Translationsbewegungen in eine Richtung gestattet sind, die eine Komponente aufweist, die zu der Längsrichtung (D) nicht parallel ist.

10. Reaktorsystem nach einem der Ansprüche 7 bis 9, wobei die Welle ein Innenrohr (21; 121) und ein Außenrohr (22; 122) umfasst, wobei das Innenrohr in dem Außenrohr derart montiert ist, dass es um die Längsachse (D) schwenken kann.

11. Reaktorsystem nach einem der Ansprüche 4 bis 10, wobei die Vorrichtung mindestens zwei Teile (21, 22; 121, 122) umfasst, die zueinander in eine Höhenrichtung (D) verschiebbar montiert sind, und Verriegelungsmittel (24), um die Teile zueinander in der Höhe zu blockieren.

## Claims

1. A method for preparing a reactor (1), said reactor defining an opening (13) for the passage of a device for dispensing solid particles (3) suitable for charging the reactor with solid particles (6, 7), comprising:
- providing a sensor support device (2) to which a sensor is fastened, said sensor being intended for collecting information on the charging of the reactor, said sensor support device comprising a first part (9) devised to support the sensor (8) and a second part (11) designed to ensure a detachable fastening of the first part to a component of the reactor (5) separate from the solid particle dispensing device, the second part comprising means (10, 140) for fastening to the reactor component (5') designed so as to apply a force on either side of said reactor component,
- removably fastening the sensor support device to said reactor component (5) separate from the solid particle dispensing device, this reactor component being a plate (4) of the reactor installed inside the reactor.

2. The method according to claim 1, wherein the sensor support device (402, 402', 402") is fastened to an edge of an opening (401) defined in the plate (400), near a corner of said opening.

3. The method according to claim 1 or 2, further comprising
- inserting the device for dispensing solid particles (3) into the opening (13),
- charging the reactor (1) with solid particles (6, 7) by means of the dispensing device.

4. A reactor system comprising
a reactor (1) defining an opening (13) for the passage of a solid particle dispensing device (3) suitable for charging the reactor with solid particles,
a sensor (8) intended for collecting information on the charging of the reactor, and
a sensor support device (2) comprising:
- a first part (9) devised to support the sensor (8),
- a second part (11) designed to provide a removable fastening of the first part to a reactor component (5) separate from the solid particle dispensing device, the second part comprising means (10, 140) for fastening to the reactor component (5') designed so as to apply a force on either side of said reactor component,
the reactor component being a plate (4) of the reactor installed inside the reactor.

5. The reactor system according to claim 4, comprising
first adjustment means (32) for rough adjustment of the fastening means (10) on either side of the reactor component (5'), and
second adjustment means (33) for fine adjustment of the force applied to the reactor component.

6. The reactor system according to any one of claims 4 or 5, wherein said device is arranged so that once the first part (9) is fastened to a reactor component (5), the sensor (8) can be offset laterally with respect to the fastening to said reactor component.

7. The reactor system according to claim 6, wherein
the second part comprises a shaft (21, 22) extending in a longitudinal direction (D), and
the first part comprises a probe support arm (9) rigidly attached to the shaft and extending in a direction having a component not parallel to the longitudinal direction.

8. The reactor system according to claim 7, wherein
the probe support arm (109) is mounted to pivot about an axis (D") having a component not parallel to the longitudinal direction (D).

9. The reactor system according to any one of claims 7 or 8, wherein the probe support arm (109) is mounted to slide relative to the shaft (21, 22), so as to allow translational movements in a direction having a component not parallel to the longitudinal direction (D).

10. The reactor system according to one of claims 7 to 9, wherein the shaft comprises an inner tube (21; 121) and an outer tube (22; 122), the inner tube being mounted in the outer tube so as to be able pivot about the longitudinal axis (D).

11. The reactor system according to one of claims 4 to 10, wherein the device comprises at least two parts (21, 22; 121, 122) mounted to slide relative to each other in a height direction (D), and locking means (24) for locking said parts in height relative to each other.
